# EUROPEAN PATENT SPECIFICATION

(11) **EP 4 639 306 B1**
(45) Date of publication and mention of the grant of the patent: **12.08.2026**
(21) Application number: 22843894.1
(22) Date of filing: 22.12.2022
(51) Int. Cl.: G05D 1/225, G05D 1/249, G05D 1/617

(54) **CENTRAL NODE AND METHOD THEREIN IN AN UNDERGROUND ENVIRONMENT**
ZENTRALER KNOTEN UND VERFAHREN DARIN IN EINER UNTERIRDISCHEN UMGEBUNG
NOEUD CENTRAL ET PROCÉDÉ ASSOCIÉ DANS UN ENVIRONNEMENT SOUTERRAIN

(43) Date of publication of application: 29.10.2025
(73) Proprietor: Epiroc Rock Drills Aktiebolag, 701 91 Örebro (SE)
(72) Inventor: HENDEBERG, Richard, 701 91 Örebro (SE); ÖKVIST, Andreas, 701 91 Örebro (SE); EINOLLAHI, Ayoub, 701 91 Örebro (SE); SVANBÄCK, Stefan, 701 91 Örebro (SE)
(74) Representative: Epiroc Rock Drills AB
(86) International application number: PCT/SE2022/051231
(87) International publication number: WO 2024/136708

(56) References cited:
- EP-A1- 3 040 508
- WO-A2-2011/051558

## Description

### TECHNICAL FIELD

Embodiments herein relate to a method and an arrangement for handling operations in an underground mining environment.

### BACKGROUND

In mining and tunneling, there is a constant ongoing process of improving efficiency, productivity and safety. Examples of changes and/or improvements that are carried out to an increasing extent, especially in mining, is the automation, fully or partly, of various processes occurring in mining. Methods for localization, mapping, control and motion planning have enabled development and deployment of fully or partly autonomous vehicles and/or mobile machines, hereinafter denoted as machines.

Repetitive and/or dangerous work in delimited environments, such as an underground environment, is often performed by autonomous machines. In such delimited environments, there is often a mix of autonomous machines, manual machines and/or operators working in the same area. Underground environments may have limited visibility and/or be inaccessible, why it may be difficult to detect if an operator or a manually operated machine is operating among the autonomous machines. In these situations, accidents may occur. To avoid accidents, autonomous machines are often operated in isolated areas of the underground environment, where no manual activities or operations are performed. Using isolated areas, however, can be an inflexible solution, introducing limitations for operations in the underground environment. A solution may be to use a zone-based safety system, where the underground environment, or the isolated area, is divided into different safety zones separated by a barrier system, e.g., sensors detecting a passage between two safety zones. Each zone may comprise one or more autonomous machines, and autonomous operations may proceed as long as the safety zone is not breached, i.e., no machine, object or operator is detected by the barrier system.

Consequently, there is a need for improvements in handling operations of autonomous machines in an underground environment.

Background art can be found in patent application EP 3 040 508 A1.

### SUMMARY

As part of developing embodiments herein a problem has been identified and will first be discussed.

A problem in underground environments relates to handling operations of autonomous machines when the underground environment is divided into different areas, also referred to as safety zones, e.g., moving autonomous machines between different areas. Moving an autonomous machine between two safety zones requires manual work to be performed. E.g., the autonomous machine may need to be operated by an operator, either remotely or manually. Further, autonomous operations may need to stop for other autonomous machines in the impacted safety zones. This requires time and resources and leads to lowered operational efficiency and productivity. One solution is to use a barrier system, e.g., sensors, that triggers an alarm when the autonomous machine is about to breach a border, also referred to as barrier, between a first area and second area. The alarm may trigger an operator to manually, remotely or physically, move the autonomous machine when breaching the border. This may require stopping autonomous operations of other machines in the first and second area, as well as manually making sure that the autonomous machine is allowed operate in the second area. However, manual work is both time consuming and increases the demand for resources. Further, stopping autonomous operations every time an autonomous machine breaches a border leads to a decreased operational efficiency and productivity in the underground environment.

An object of embodiments herein is to provide a mechanism that increases operational safety of autonomous machines and improves the operational efficiency and productivity in a delimited environment, such as an underground environment. The object is achieved by the independent claims.

According to a first aspect, a method performed by a central node for handling operations in an underground environment is provided. The underground environment comprises at least a first area and second area. An autonomous machine is located in the first area. One or more objects are located in the first area and/or the second area.

When the autonomous machine approaches a border between the first area and the second area, the central node obtains an identity of the autonomous machine based on sensor data obtained from a third sensor.

The central node determines that the autonomous machine is moving in a direction from the first area towards the second area.

The central node determines whether the autonomous machine is allowed to move in the determined direction based on the obtained identity and one or more criteria being fulfilled.

Based on whether the autonomous machine is allowed to move in the determined direction, the central node obtains one or more operational rules.

The central node operates the autonomous machine and objects located in the first area and/or the second area in accordance with the obtained one or more operational rules.

According to an exemplary embodiment, a first sensor and a second sensor may be located at the border. The first sensor and the second sensor may be spaced apart by a distance such that the first sensor is located closer to the first area and the second sensor is located closer to the second area. As explained further in the description, the first sensor and/or the second sensor may issue an indication indicating that the autonomous machine is about to breach the border.

According to an exemplary embodiment, the central node may obtain an indication from at least one of the first sensor and the second sensor. The indication may indicate that the autonomous machine is about to breach the border. The central node may determine the direction the autonomous machine is moving based on the indication. By this, the central node becomes aware that the autonomous machine is about to breach the border between the first area and the second area of the underground environment. The indication may allow the central node to determine the direction the autonomous machine is moving.

According to an exemplary embodiment, the central node may determine the direction the autonomous machine is moving is based on which of the first sensor and the second sensor provided the indication. By this, the direction may be efficiently determined. This since the sensor that provided the indication is the sensor, such as the first sensor, that is first to detect the autonomous machine, which may be the sensor of the first sensor and second sensor that is closest to the area the autonomous machine is moving from. This may also be expressed as to be the sensor that is furthest from the area that the autonomous machine is moving towards, such as the second sensor.

According to an exemplary embodiment, obtaining the indication may further comprise obtaining a first indication from the first sensor and a second indication from the second sensor. The direction the autonomous machine is moving may be determined based on which of the first indication and the second indication is received with the highest signal strength. By this, the direction may efficiently be determined, e.g., by comparing the signal strengths related to the indications received from the first sensor and the second sensor. E.g., the sensor closest to the area the autonomous machine is moving towards may detect the autonomous machine at a longer distance than the sensor closest to the area the autonomous machine is moving from. Thus, a signal strength of a signal used for detecting the autonomous machine may be stronger when detected by the sensor closest to the area the autonomous machine is moving from than a signal used for detecting the autonomous machine when detected by the sensor closest to the area the autonomous machine is moving towards.

According to an exemplary embodiment, the one or more criteria may comprise any one or more out of:
- An area of the underground environment where the autonomous machine is located compared to an area of the underground environment where the autonomous machine is expected to be located,
- a direction of passage between the first area and the second area,
- whether the autonomous machine is allowed to operate in the first area and/or the second area,
- a number of objects located in the area the autonomous machine is moving to,
- a number of objects allowed to be located in the area the autonomous machine is moving towards,
- a status of the area the autonomous machine is moving towards, and
- a status of the autonomous machine.

By this, the central node may determine whether or not the autonomous machine is allowed to move, such as breach the border, in the determined direction is a flexible way. This since the criteria based on which this determined may be configured in different ways, depending on different circumstances. E.g., the criteria may be different at different times, and/or at different borders between the first area and the second area, and/or at borders between other areas.

According to an exemplary embodiment, the one or more operational rules may comprise any one or more out of:
- stopping operations of the autonomous machine when the autonomous machine 20 is not allowed to move in the determined direction.
- stopping operations of at least one of the one or more objects located in the first area and/or second area when the autonomous machine is not allowed to move in the determined direction.
- allowing continued operations of the autonomous machine when the autonomous machine is allowed to move in the determined direction.
- allowing continued operations of at least one of the one or more objects located in the first area and/or second area when the autonomous machine is allowed to move in the determined direction.

By this, the central node may efficiently and flexibly handle operations in the underground environment, and thus increase the operational efficiency in the underground environment. This since the one or more rules may be flexibly configured.

According to an exemplary embodiment, obtaining the identity of the autonomous machine may further comprise determining whether or not the identity of the autonomous machine is unknown. By this, unknown autonomous machine may be detected efficiently detected and handled accordingly.

According to an exemplary embodiment, wherein when the identity of the autonomous machine is unknown, the obtained operational rule comprises stopping operations of the autonomous machine and one or more objects located in the first area and/or the second area. By this, the unknown autonomous machine may be stopped quickly, thus causing less disturbances in the underground environment and reducing the risk of accidents.

According to an exemplary embodiment, wherein determining whether the autonomous machine is allowed to move in the determined direction may comprise determining whether the area where the autonomous machine is located is the same as an area where the autonomous machine is expected to be located. By this, the central node may efficiently determine whether the autonomous machine is allowed to move in the determined direction.

According to an exemplary embodiment, wherein when an area where the autonomous machine is located differs from an area where the autonomous machine is expected to be located, the autonomous machine may not be allowed to move in the determined direction. This may be since if the autonomous machine is not located where it is expected to be located, the risk of accidents may be increased since the central node has an incomplete situational awareness of the underground environment.

According to an exemplary embodiment, wherein when an area where the autonomous machine is located is the same as an area the autonomous machine is expected to be located, determining whether the autonomous machine is allowed to move in the determined direction may comprise any one or more out of:
- Evaluating one or more further criteria, or
- determining that the autonomous machine is allowed to move in the determined direction.

By this, increased safety may be achieved, since in some examples one or more further criteria is evaluated. Or, when the central has enough data to allow the passage across the border, such as breaching the border, the operational efficiency of the underground environment may be increased since the decision may be taken quickly.

According to an exemplary embodiment, wherein evaluating one or more further criteria may comprise determining that the autonomous machine is allowed to move in the determined direction when any one or more out of:
- The number of objects located in the second area is less than the number of objects allowed to be located in the second area,
- the status of the second area is that autonomous operation is allowed, and
- the status of the second area is that the autonomous machine is allowed to operate in the second area.

By this, increased safety may be achieved, since one or more further criteria is evaluated. This e.g., when the central node needs more data before allowing the passage across the border, such as breaching the border.

According to an exemplary embodiment, wherein evaluating one or more further criteria may comprise determining that the autonomous machine is not allowed to move in the determined direction when any one or more out of:
- The number of objects located in the second area is equal to or exceeds the number of objects allowed to be located in the second area,
- the status of the second area is that autonomous operation is not allowed, and
- the status of the second area is that the autonomous machine is not allowed to operate in the second area.

By this, increased safety may be achieved, since one or more further criteria is evaluated. This e.g., when the central node needs more data before allowing the passage across the border, such as breaching the border.

According to a second aspect, a central node configured to handle operations in an underground environment is provided. The underground environment comprises at least a first area and second area. An autonomous machine is adapted to be located in the first area and one or more objects are adapted to be located in the first area and/or the second area. The central node is arranged to comprise a memory operable to store instructions and processing circuitry operable to execute the instructions.

When the autonomous machine approaches a border between the first area and the second area, the central node obtains an identity of the autonomous machine based on sensor data obtained from a third sensor.

The central node determines that the autonomous machine is moving in a direction from the first area towards the second area.

The central node determines whether the autonomous machine is allowed to move in the determined direction based on the obtained identity and one or more criteria being fulfilled.

Based on whether the autonomous machine is allowed to move in the determined direction, the central node obtains one or more operational rules.

The central node operates the autonomous machine and objects located in the first area and/or the second area in accordance with the obtained one or more operational rules.

According to a third aspect, it is furthermore provided herein a computer program comprising instructions, which, when executed on at least one processor, cause the at least one processor to carry out the computer-implemented method above, as performed by the control unit.

According to a fourth aspect, the autonomous machine may operate in a delimited environment using methods and systems described herein for an underground environment. These described methods may be used for machines operating in a delimited environment as well.

Embodiments herein may bring the advantage of an increased operational safety of an autonomous machine in an underground environment. This may be achieved by, as mentioned above, making it possible to operate the autonomous machine, and other objects located in the underground environment, according to one or more operational rules obtained by the central node based on whether the autonomous machine is allowed to move across the border, such as breaching the border, between the first area and second area of the underground environment in a certain direction. A central node obtains an identity of the autonomous machine when the autonomous machine approaches a border between the first area and the second area of the underground environment. It is determined that the autonomous machine is moving I direction from the first area towards the second area. Based on one or more criteria being fulfilled and the identity of the autonomous machine, the central node determines whether the autonomous machine is allowed to move in the determined direction. Based on this, one or more operational rule are obtained, an the central node operates the autonomous machine and objects located in the first area and/or second area in accordance with the obtained one or more rules. This leads an increased operational safety of an autonomous machine operating in the underground environment.

Further, embodiments herein may bring the advantage of an improved operational efficiency in the underground environment. This since by determining whether or not the autonomous machine is allowed to move in a certain direction and obtain based on this obtain one or more operational rules, it is possible to avoid to completely stop operations of the autonomous machine, and other objects located in the underground environment, in case the autonomous machine is not allowed to move across the border, such as breaching the border, in a certain direction.

### BRIEF DESCRIPTIONS OF DRAWINGS

Examples of embodiments herein are described in more detail with reference to attached drawings in which:
Figures 1a to 1c disclose examples of an underground environment according to embodiments herein.
Figure 2 shows a flowchart depicting embodiments of a method in a central unit.
Figures 3a to 3b shows schematic block diagrams illustrating embodiments of a central unit.

### DETAILED DESCRIPTION

An object of embodiments herein is to provide mechanisms that increase the operational efficiency and productivity in a delimited environment, such as an underground environment of an autonomous machine operating in an underground environment and improves the operational efficiency in the underground environment.

Embodiments herein may bring the advantage of an increased operational safety of an autonomous machine in an underground environment. This may be achieved by, as mentioned above, making it possible to operate the autonomous machine according to an operational rule determined based one whether or not the autonomous machine is allowed to move in certain direction between two areas of the underground environment. Further, embodiments herein may bring the advantage of an improved operational efficiency in the underground environment. This by avoiding to completely stop operations of the autonomous machine and/or objects operating in the underground environment in case the autonomous machine is not allowed to move in a determined direction.

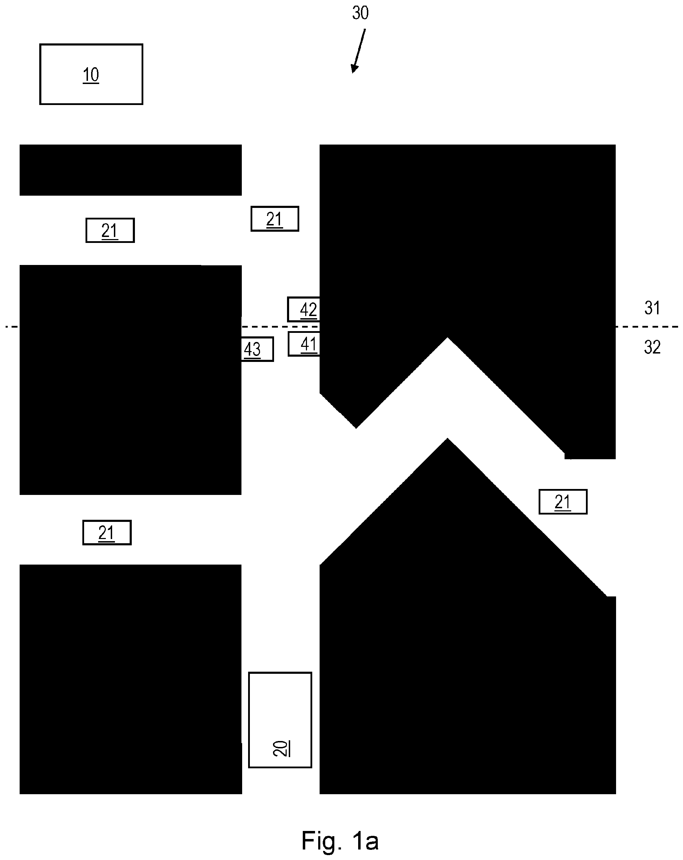

**Fig. 1a** shows a schematic illustration of an underground environment 30. An autonomous machine 20 and one or more objects 21 may operate in the underground environment 30. The underground environment may be divided into several areas, such as a first area 31 and a second area 32. The first area 31 and second area 32 may also be referred to as a first safety zone 31 and second safety zone 32. Although only two areas are shown in Fig. 1a, the underground environment 30 may be divided into more than two areas. Fig. 1a further shows a central node 10, e.g., for handling operations in the underground environment 30. The central node 10 may be located in the underground environment 30, or may be located outside of the underground environment 30, e.g., in a server or a cloud device. The central node 10 may be able to communicate with the autonomous machine 20 and the one or more objects 21. One or more sensors, such as a first sensor 41, a second sensor 42 and a third sensor 43, are located in the underground environment 30. The first sensor 41 and the second sensor 42 may be used to provide indications to the central node 10. The indications may indicate that the autonomous machine 10 is about to breach the border between two areas, such as the first area 31 and the second area 32. The word border may interchangeably be referred to as barrier when used herein. The third sensor 43 may provide the identity of the autonomous machine 20 to the central node 10. Thus, the central node 10 may obtain indications from any of the first sensor 41 and the second sensor 42 and obtain the identity of the autonomous machine 20 from the third sensor 43. The first sensor 41 and the second sensor 42 are located at border between the first area 31 and the second area 32. The first sensor 41 and second sensor 42 are located at a distance from each other such that the first sensor 41 is located closer to, or in, the first area 31 compared to the second sensor 42. The second sensor 42 is located closer to, or in, the second area 32, compared to the first sensor 41. The third sensor 43 is e.g., located, or be of a type, such that the central node 10 may obtain the identity of the autonomous machine 20 before obtaining indications from the first sensor 41 and/or second sensor 42.

One or more objects 21 may be located in the underground environment 30. An object 2 may e.g., be a vehicle, a machine, another autonomous machine, and/or a person. The central node 10 may control operations of the autonomous machine 20 and/or the objects 21. The central node 10 may determine direction the autonomous machine 20 is moving when about to breach a border between the first area 31 and the second area 32. Based on one or more criteria being fulfilled, the central node 10 may determine whether or not the autonomous machine 20 is allowed to move in the determined direction, obtain one or more operational rules based on whether the autonomous machine 20 is allowed or disallowed to move in the determined direction. The central node 10 then handles operations in the underground environment 30 by operating the autonomous machine 20 and/or the one or more objects 21 based on the one or more obtained operational rules. An operational rule may e.g., comprise stopping operations of any of the autonomous machine 20, stopping operations one or more of the objects 21 located in the first area 31 and/or the second area 32, allowing continued operations of the autonomous machine 20 and/or allowing continued operations of one or more of the objects 21 located in the first area 31 and/or the second area 32.

As mentioned above, embodiments herein bring the advantage of an increased operational safety an underground environment. This may result in increased operational efficiency and also an increased productivity in the underground environment, since e.g., autonomous machines vehicles operating in the underground environment may be efficiently operated by adapting operations based on the whether or not the autonomous machine is allowed to move between certain areas in the underground environment.

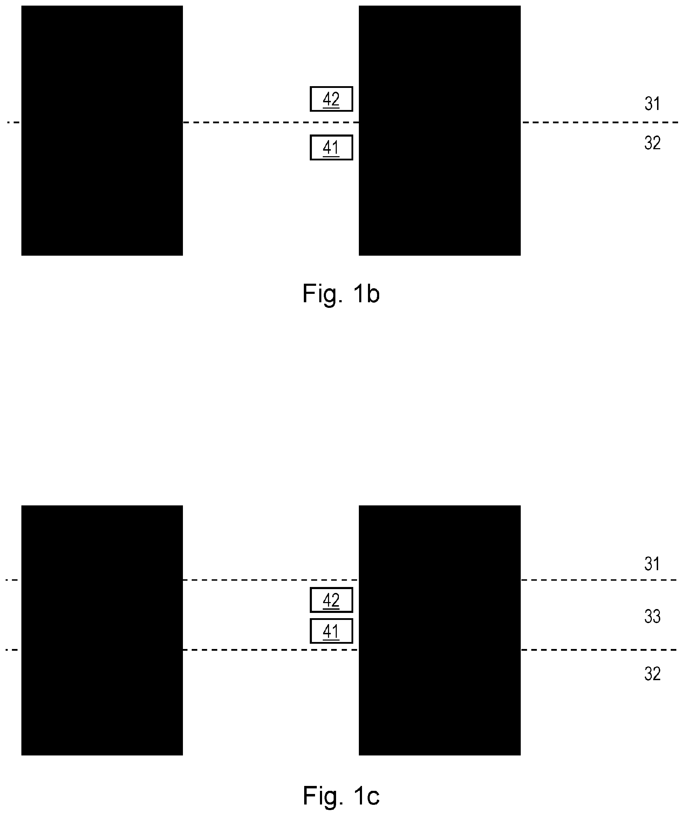

Fig. **1b** shows an example of the border between the first area 31 and the second area 32 and the location of the first sensor 41 and the second sensor 42. As mentioned above, the first sensor 41 and the second sensor 42 are located at the border between the first area 31 and second area 32. Being located at the border may mean being located in proximity to the border, such as within a predetermined distance from the border. The predetermined distance may be chosen such that the central node 10 only obtains the indication when an autonomous machine, such as the autonomous machine 20, is about to breach the border. This in order to avoid false indications, i.e., indications obtained even though no autonomous machine, or other object, is about to breach the border. Being located closer to the first area 31 may mean being located in first area 31 and in proximity to the border. Being located closer to the second area 32 may mean being located in second area 32 and in proximity to the border.

**Fig. 1c** shows another example of the border between the first area 31 and the second area 32 and the location of the first sensor 41 and the second sensor 42. Here the border is defined by a distance, such as a border area 33, that is not part of either of the first area 31 or the second area 32. In such an example, the first sensor 41 and the second sensor 42 is located in, such as comprised in, the border area 33. As may be seen in Fig. 1c, the first sensor 41 and the second sensor 42 are located at distance from each other. The distance may be such that the first sensor 41 is located closer to first area 31 than to the second area 32, and the second sensor 42 is located closer to the second area 32 than to the first area 31. According to some examples, the distance between the first sensor 41 and the second sensor comprises a distance such that an autonomous machine, such as the autonomous machine 20 pass the first sensor 41 while not reaching the second sensor 42.

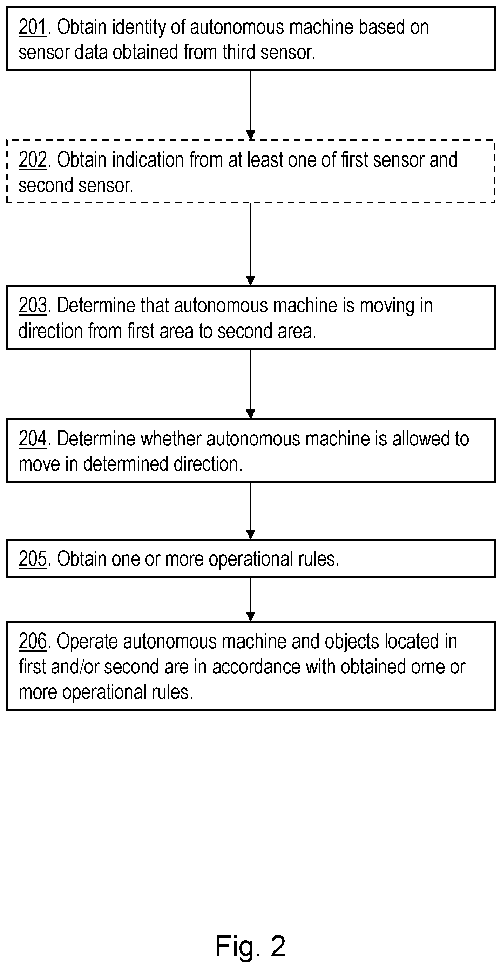

**Fig. 2** shows an example embodiment of a method performed by a method performed by the central node 10 for handling operations in the underground environment 30. The underground environment 30 comprises at least the first area 31 and the second area 32. The autonomous machine 20 is located in the first area 31 and one or more objects 21 is located in the first area 31 and/or the second area 32. The method comprises the following actions, which may be taken in any suitable order. Optional actions are referred to as dashed boxes in Fig. 2.

### Action 201

When the autonomous machine 20 approaches a border between the first area 31 and the second area 32, the central node 10 obtains an identity of the autonomous machine 20 based on sensor data obtained from a third sensor 43. The identity may be an identity that uniquely identifies the autonomous machine 20. The third sensor 43 may be located in underground environment 30. It may be located in a position such that it may collect sensor data enabling the central node 10 to identify, such as obtain the identity of, the autonomous machine 20 before the autonomous machine breach the border between the first area 31 and second area 32. The third sensor may e.g., be a camera and/or any type of radio transceiver, such as e.g., a Radio Frequency Identification (RFID) reader, a WiFI device and/or a Bluetooth device. An RFID reader may e.g., collect sensor data from an RIFD transmitter comprised in the autonomous machine 20. Then central node 10 may then identify. A camera may for example collect sensor data by capturing picture and/or video of the autonomous machine 20. A Bluetooth device may communicate with mobile Bluetooth device comprised in the autonomous machine 20 in order to collect sensor data.

In some embodiments, obtaining the identity of the autonomous machine 20 further comprises that the central node 10 determines whether or not the identity of the autonomous machine 20 is unknown. This may e.g., comprise comparing the obtained identity with a list of stored identities related to autonomous machines 20. If the obtained identity is not comprised in the list of stored identities, it may be determined that the identity is unknown. The list may comprise identities related to autonomous machines expected to be located in the underground environment 30. Alternatively, the central node 10 may query an external entity, e.g., a server of cloud service, keeping track of the identities in order to determine whether or not the identity of the autonomous machine 20 is unknown.

### Action 202

In some embodiments, the central node 10 obtains an indication from at least one of the first sensor 41 and the second sensor 42. The indication indicates that the autonomous machine 20 is about to breach the border. The first sensor 41 and the second sensor 42 may be located at the border. The first sensor 41 and the second sensor 42 may be spaced apart by a distance such that the first sensor 41 is located closer to the first area 31 and the second sensor 42 is located closer to the second area 32. The first sensor 41 and second sensor 42 may comprise the same type of sensor or may comprise different type of sensors. The type of sensor may e.g., be a light sensor, a camera, movement detecting sensor, a Light Detection and Ranging (LIDAR) sensor, a LIDAR curtain, a radar, and/or an RFID reader. Being located at the border may mean being located in proximity to the border, such as within a predetermined distance from the border. The predetermined distance may be chosen such that the central node 10 only obtains the indication when an autonomous machine, such as the autonomous machine 20, is about to breach the border. This in order to avoid false indications, i.e., indications obtained even though no autonomous machine, or other object, is about to breach the border. Being located closer to the first area 31 may mean being located in first area 31 and in proximity to the border. Being located closer to the second area 32 may mean being located in second area 32 and in proximity to the border. Alternatively, the border is defined by a distance, such as a border area 33, that is not part of either of the first area 31 or the second area 32. Is such an example, the first sensor 41 and the second sensor 42 is located in, such as comprised in, the border area 33.

In some embodiments, obtaining the indication further comprises that the central node 10 obtains a first indication from the first sensor 41 and a second indication from the second sensor 42.

### Action 203

The central node 10 determines that the autonomous machine 20 is moving in a direction from the first area 31 towards the second area 32. There are several possibilities for determining the direction the autonomous machine is moving, some of which are discussed below.

As mentioned above, the central node 10 may in some embodiments obtain an indication from at least one of the first sensor 41 and the second sensor 42. This indication may be used for determining the direction the autonomous machine 20 is moving, e.g., form the first area 31 towards the second area 32 or from the second area 32 towards the first area 31. Therefore, in some embodiments, the central node 10 determines the direction the autonomous machine 20 is moving based on the indication, such as the obtained indication. Below follows different examples of how the central node 10 may determine the direction the autonomous machine 20 is moving.

The indication may, as mentioned above, be received from any one of the first sensor 41 and/or the second sensor 42. Therefore, in some embodiments, the central node 10 determines the direction the autonomous machine 20 is moving is based on which of the first sensor 41 and the second sensor 42 provided the indication. This may e.g., mean that when the indication is obtained from the first sensor 41, the autonomous machine 20 is moving in the direction from the first area 31 towards the second area 32. Correspondingly, this may e.g., mean that when the indication is obtained from the second sensor 42, the autonomous machine 20 is moving in the direction from the second area 32 towards the first area 31.

As the central node 10 may in some embodiments obtain an indication from both the first sensor 41 and the second sensor 42, thus obtaining two indications, the central node 10 may determine the direction the autonomous machine 20 is moving based on both the obtained indications. From this follows that in some embodiments, the direction the autonomous machine 20 is moving is determined, by the central node 10, based on which of the first indication and the second indication is obtained with the highest signal strength. Alternatively, the central node 10 may determine the direction the autonomous machine 20 is moving based on which of the two indications, such as the first indication and the second indication, is obtained first. Alternatively, the direction is determined based on which of the first indication and the second indication was issued first. According to this example, the obtained indications comprise a respective timestamp indicating when the respective indication was issued.

### Action 204

The central node 10 determines whether the autonomous machine 20 is allowed to move in the determined direction based on the obtained identity and one or more criteria being fulfilled. As described below, the outcome of this may impact how the autonomous machine may be operated.

The one or more criteria may comprise any one or more out of the following criteria described below. The use of first, second, third etc., below is only meant as way to distinguish the different criteria from each other.

A first criteria may comprise an area of the underground environment 30 where the autonomous machine 20 is located compared to an area of the underground environment 30 where the autonomous machine 20 is expected to be located. This may comprise comparing the expected area with the actual area, i.e., the area the autonomous machine 20 is located in. The first criteria may be considered to be fulfilled when the expected area and the actual area coincide, such as when the autonomous machine 20 is located in the expected area, e.g., the first area 31 or the second area 32.

A second criteria may comprise a direction of passage between the first area 31 and the second area 32, such as e.g., from the first area 31 towards the second area 32 or from the second area 32 towards the first area 31. The second criteria may e.g., be considered to be fulfilled when the direction of passage is from an area where the autonomous machine 20 is expected to be located towards another area. E.g., if determined that the autonomous machine 20 is expected to be located in the first area 31, the second criteria may be considered to be fulfilled when the direction of passage is from the first area 31 towards e.g., the second area 32.

A third criteria may comprise whether the autonomous machine 20 is allowed to operate in the first area 31 and/or the second area 32. This may comprise determining, or checking, whether or not the autonomous machine 20 is allowed to operate in the first area 31 and/or second area 32. When the autonomous machine 20 is allowed to operate in the area it is moving towards, such as e.g., the second area 32, the third criteria may be considered to be fulfilled. Alternatively, the third criteria may be considered to be fulfilled when the autonomous machine 20 is allowed to operate in both the first area 31 and the second area 32, i.e., both the area the autonomous machine 20 is moving from and the area it is moving towards.

A fourth criteria may comprise a number of objects 21 located in the area the autonomous machine 20 is moving to. E.g., the fourth criteria may be considered to be fulfilled when the number or objects 21 located in the area the autonomous machine 20 is moving towards is below a first threshold. The first threshold may e.g., be based on a type of operation performed by the autonomous machine 20, the size of the area and/or the type of operation performed by objects 21 located in the area.

A fifth criteria may comprise a number of objects 21 allowed to be located in the area the autonomous machine 20 is moving to. The fifth criteria may be considered to be fulfilled when the number of objects 21 allowed to operate in the area the autonomous machine 20 is moving towards is below a second threshold. Similar the first threshold above, the second threshold may e.g., be based on a type of operation performed by the autonomous machine 20, the size of the area and/or the type of operation performed by objects 21 located in the area. Alternatively, the fifth criteria may be considered to be fulfilled when the number of objects 21 located in the area the autonomous machine 20 is moving towards is less than the number of allowed objects 21. In some examples, the number of allowed objects 21 comprises the first threshold, in other examples the number of allowed objects is different from the first threshold.

A sixth criteria may comprise a status of the area the autonomous machine 20 is moving to. The sixth criteria may be considered to be fulfilled when the status of the area that the autonomous machine 20 is moving towards is that the area is open for operations. This may mean that it is allowed for objects, such as the objects 21, and autonomous machines, such as the autonomous machine 20, to operate in the area. correspondingly, the sixth criteria may be considered to not be fulfilled when the area the autonomous machine 20 is moving towards is closed for operation.

A seventh criteria may comprise a status of the autonomous machine 20. A status of the autonomous machine 20 may e.g., comprise a type of operation performed, or to be performed, by the autonomous machine and/or a type of autonomous machine 20. The seventh criteria may be considered to be fulfilled when the type of operation performed, or to be performed, by the autonomous machine 20 and/or the type of autonomous machine 20 is allowed in the area the autonomous machine 20 is moving towards.

The criteria described above may combined in any way.

As described above, the central node 10 may determine whether or not the obtained identity is unknown. The central node 10 may further, based on the obtained identity, determine where the autonomous machine 20 is expected to be located. E.g., the central node 10 may store the expected location together with, or in conjunction with, the identity in the list of identities referred to above. Thus, the central node 10 may determine the expected location of the autonomous machine 20 by checking the list of identities. Alternatively, the central node 10 may query an external entity, e.g., a server of cloud service, in order to determine the expected location of the autonomous machine 20. The expected location may e.g., be an area of the underground environment 30, such as e.g., the first area 31, the second area 32, or another area of the underground environment 30.

In some embodiments, determining whether the autonomous machine 20 is allowed to move in the determined 203 direction comprises determining whether the area where the autonomous machine 20 is located is the same as an area where the autonomous machine 20 is expected to be located. In other words, the central node 10 determines whether the autonomous machine 20 is allowed to move in the determined 203 direction by comparing the area where the autonomous machine 20 is located with the area the autonomous machine 20 is expected to be located. When the area where the autonomous machine 20 is located differs from the area where the autonomous machine 20 is expected to be located, the autonomous machine 20 is not allowed to move in the determined direction. Alternatively, when the area where the autonomous machine 20 is located differs from the area where the autonomous machine 20 is expected to be located, the autonomous machine 20 is allowed to move in the determined direction when the determined direction is towards the area where the autonomous machine 20 is expected to be located.

In some embodiments, when the area where the autonomous machine 20 is located is the same as an area the autonomous machine 20 is expected to be located, the central node 10 determines whether the autonomous machine 20 is allowed to move in the determined direction by any one or more out of: Evaluating one or more further criteria, or determining that the autonomous machine 20 is allowed to move in the determined direction. The one or more further criteria may be any one or more of the first to seventh criteria described above.

According to some embodiments, evaluating one or more further criteria may comprise determining that the autonomous machine 20 is allowed to move in the determined direction when any one or more out of: The number of objects 21 located in the second area 32 is less than the number of objects 21 allowed to be located in the second area 32, the status of the second area 32 is that autonomous operation is allowed, and the status of the second area 32 is that the autonomous machine 20 is allowed to operate in the second area 32. According other embodiments, evaluating one or more further criteria comprises determining that the autonomous machine 20 is not allowed to move in the determined direction when any one or more out of: the number of objects 21 located in the second area 32 is equal to or exceeds the number of objects 21 allowed to be located in the second area 32, the status of the second area 32 is that autonomous operation is not allowed, and the status of the second area 32 is that the autonomous machine 20 is not allowed to operate in the second area 32. The autonomous machine 20 being allowed to operate in the second area 32 may comprise that the autonomous machine 20 has permission to operate is the second area 32. Correspondingly, the autonomous machine 20 not being allowed to operate in the second area 32 may comprise that the autonomous machine 20 does not have permission to operate is the second area 32.

### Action 205

Based on whether the autonomous machine 20 is allowed to move in the determined direction, the central node 10 obtains one or more operational rules. The one or more operational rule may be obtained from a memory in the central node 10. Alternatively, the central node 10 may obtain the one or more operational rule by querying an external entity, such as e.g., a server or a cloud service.

An operational rule may e.g., comprise:
- allowing or stopping continued operations of the autonomous machine 20,
- allowing or stopping continued operations of the one or more objects 21 located in the first area 31,
- allowing or stopping continued operations of the one or more objects 21 located in the second area 32.

Below follows some examples of operational rules that may be obtained by the central node 10. These examples are not limiting, any combination of the above described rule composition is possible.

The one or more operational rules may comprise any one or more out of the following rules.

According to e.g., a first rule, a rule may comprise stopping operations of the autonomous machine 20 when the autonomous machine 20 is not allowed to move in the determined direction.

According to e.g., a second rule, a rule may comprise stopping operations of at least one of the one or more objects 21 located in the first area 31 and/or second area 32 when the autonomous machine 20 is not allowed to move in the determined direction.

According to a third rule, a rule may comprise allowing continued operations of the autonomous machine 20 when the autonomous machine 20 is allowed to move in the determined direction.

According to e.g., a fourth rule, a rule may comprise allowing continued operations of at least one of the one or more objects 21 located in the first area 31 and/or second area 32 when the autonomous machine 20 is allowed to move in the determined direction.

A rule may comprise any combination of the above-mentioned rules. In some examples, the central node 10 obtains a plurality of operational rules. In such an example, the autonomous machine 20 may be operated according to one rule and the one or more objects 21 located in the first area 31 and/or the second area 32 may be operated according to another rule. Alternatively, or additionally, one or more objects 21 located in the first area 31 may be operated according to different operational rule than one or more objects located in the second area 32.

In some embodiments, when the identity of the machine is unknown, the obtained operational rule comprises stopping operations of the autonomous machine 20 and one or more objects 21 located in the first area 31 and the second area 32. This since an unknown autonomous machine operating in the underground environment may be comprise an increased risk for accidents.

### Action 206

The central node 10 operates the autonomous machine 20 and objects 21 located in the first area 31 and/or the second area 32 in accordance with the obtained one or more operational rules. This may comprise providing, such as sending transmitting or in any other way conveying, the one or more operational rules to the autonomous machine 20 and objects 21 located in the first area 31 and/or the second area 32. In some examples, the central node 10 operates the autonomous machine 20 and objects 21 located in the first area 31 and/or the second area 32 according to one obtained rule. This may e.g., mean that the obtained rule comprises operational instruction for the autonomous machine 20 and objects 21 located in the first area 31 and/or the second area 32. In other examples, the central node 10 operates the autonomous machine 20 according and objects 21 located in the first area 31 and/or the second area 32 according to two or more obtained rules. This may e.g., mean that one obtained rule comprises operation instructions for operating the autonomous machine 20, and one or more other rules comprises operational instructions for operating the objects 21 located in the first area 31 and/or the second area 32. Objects 21 located in the first area 31 may be operated according to the same rule as objects 21 located in the second area 32. Alternatively, objects 21 located in the first area 31 may be operated according to a different rule then objects 21 located in the second area 32.

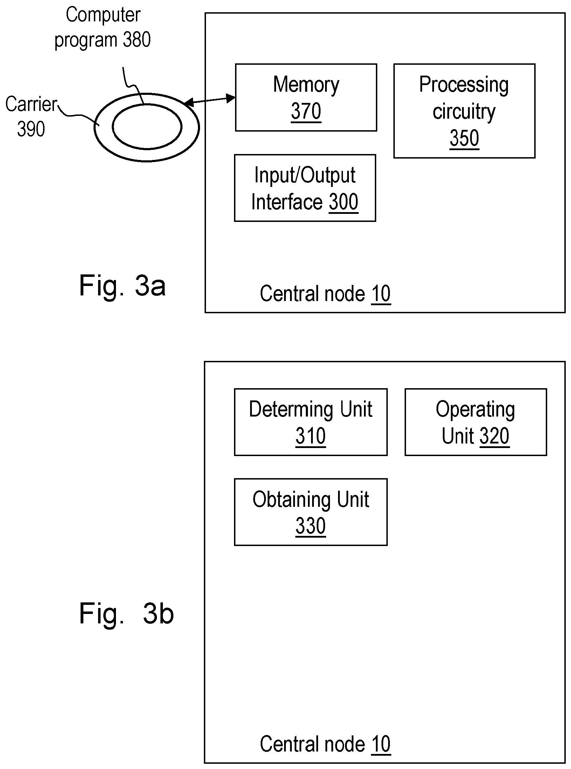

**Fig. 3a** disclose an example configuration of the central node 10 configured to handle operations in the underground environment 30. The central node 10 comprises a memory 360 operable to store instructions and processing circuitry 350 operable to execute the instructions. The central node 10 may be located in the underground environment 30. Alternatively, it may be located outside the underground environment 30, e.g., in a cloud service.

The central node 10 may comprise **an input and output interface 300** configured to communicate with, e.g., the mobile unit 20, another mobile unit 20 and other objects 2 in underground environment.

**Fig. 3b** also discloses an example configuration of processing circuitry for a central unit, e.g., the processing circuitry 350 disclosed in Fig. 3a. The processing circuitry may comprise a **determining unit 310,** an **operating unit 320** and an **obtaining unit 330** configured to perform the methods above.

The embodiments herein may be implemented through the processing circuitry 350 in the central node 10 depicted in Figure 3a, together with respective computer program code for performing the functions and actions of the embodiments herein. The processing circuitry 350 may comprise one or more processors and one or more memory units. The memory units may be the memory 360. The program code mentioned above may also be provided as a computer program product, for instance in the form of a data carrier carrying computer program code for performing the embodiments herein when being loaded into the central node 10. One such carrier may be in the form of a CD ROM disc, a USB flash drive, and/or an Over-the-Air (OTA) carrier. It is however feasible with other data carriers such as a memory stick. The computer program code may furthermore be provided as pure program code on a server and downloaded to the central node 10.

The memory 360 of the central node 10 may further comprise one or more memory units. The memory 360 is configured to store instructions executable by the processing circuitry 350. The memory 360 is arranged to be used to store e.g. information, messages, indications, configurations, thresholds, measurements, locations, positions, operational rules and applications to perform the methods herein when being executed in executed in the central node 10.

The central node 10 is configured to handle operations in the underground environment 30. The underground environment 30 comprises at least the first area 31 and second area 32. The autonomous machine 20 is adapted to located in the first area 31 and one or more objects 21 is adapted to be located in the first area 31 and/or the second area 32. The central unit 10 is arranged to comprise the memory 360 operable to store instructions and the processing circuitry 350 operable to execute the instructions. The central node 10 is operable to, when the autonomous machine 20 approaches a border between the first area 31 and the second area 32, obtain an identity of the autonomous machine 20 based on sensor data obtained from a third sensor 43.

The central node 10 determines that the autonomous machine 20 is moving in a direction from the first area 31 towards the second area 32.

The central node 10 determines whether the autonomous machine 20 is allowed to move in the determined direction based on the obtained identity and one or more criteria being fulfilled.

Based on whether the autonomous machine 20 is allowed to move in the determined direction, the central node 10 obtains one or more operational rules.

The central node 10 operates the autonomous machine 20 and objects 21 located in the first area 31 and/or the second area 32 in accordance with the obtained one or more operational rules.

In some embodiments, a computer program 370 comprises instructions, which when executed by the processing circuitry 350, e.g., of the respective at least one processor of the processing circuitry 350, cause the processing circuitry 350 of the central node 10 to perform the actions above.

In some embodiments, a respective carrier 380 comprises the respective computer program 370, wherein the carrier 380 is one of an electronic signal, an optical signal, an electromagnetic signal, a magnetic signal, an electric signal, a radio signal, a microwave signal, or a computer-readable storage medium.

Those skilled in the art will appreciate that the units in the central node 10 described above may refer to a combination of analogue and digital circuits, and/or one or more processors configured with software and/or firmware, e.g., stored in the central node 10, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims.

## Claims

1. A method performed by a central node (10) for handling operations in an underground environment (30), the underground environment (30) comprising at least a first area (31) and second area (32), wherein a first sensor (41) and a second sensor (42) are located at a border between the first area (31) and the second area (32), the first sensor (41) and the second sensor (42) being spaced apart by a distance such that the first sensor (41) is located closer to the first area (31) and the second sensor (42) is located closer to the second area (32), wherein an autonomous machine (20) is located in the first area (31) and one or more objects (21) is located in the first area (31) and/or the second area (32), the method comprising:
when the autonomous machine (20) approaches the border between the first area (31) and the second area (32), *obtaining* (201) an identity of the autonomous machine (20) based on sensor data obtained from a third sensor (43),
*obtaining* (202) an indication from at least one of the first sensor (41) and the second sensor (42), the indication indicating that the autonomous machine (20) is about to breach the border,
*determining* (203) that the autonomous machine (20) is moving in a direction from the first area (31) towards the second area (32) based on the indication,
*determining* (204) whether the autonomous machine (20) is allowed to move in the *determined* (203) direction based on the obtained identity and one or more criteria being fulfilled,
based on whether the autonomous machine (20) is allowed to move in the *determined* (203) direction, *obtaining* (205) one or more operational rules,
*operating* (206) the autonomous machine (20) and objects (21) located in the first area (31) and/or the second area (32) in accordance with the *obtained* (205) one or more operational rules.

2. The method according to claim 1, wherein any one out of:
*determining* (203) the direction the autonomous machine (20) is moving is based on which of the first sensor (41) and the second sensor (42) provided the indication, or
*obtaining* (202) the indication further comprises obtaining a first indication from the first sensor (41) and a second indication from the second sensor (42), and wherein the direction the autonomous machine (1) is moving is *determined* (203) based on which of the first indication and the second indication is received with the highest signal strength.

3. The method according to any of claims 1-2, wherein the one or more criteria comprises any one or more out of:
- an area of the underground environment (30) where the autonomous machine (20) is located compared to an area of the underground environment (30) where the autonomous machine (20) is expected to be located,
- a direction of passage between the first area (31) and the second area (32),
- whether the autonomous machine (20) is allowed to operate in the first area (31) and/or the second area (32),
- a number of objects (21) located in the area the autonomous machine (20) is moving to,
- a number of objects (21) allowed to be located in the area the autonomous machine (20) is moving to,
- a status of the area the autonomous machine (20) is moving to, and
- a status of the autonomous machine (20).

4. The method according to any of claims 1-3, wherein the one or more operational rules comprises any one or more out of:
- stopping operations of the autonomous machine (20) when the autonomous machine (20) is not allowed to move in the *determined* (203) direction,
- stopping operations of at least one of the one or more objects (21) located in the first area (31) and/or second area (32) when the autonomous machine (20) is not allowed to move in the *determined* (203) direction,
- allowing continued operations of the autonomous machine (20) when the autonomous machine (20) is allowed to move in the *determined* (203) direction, and
- allowing continued operations of at least one of the one or more objects (21) located in the first area (31) and/or second area (32) when the autonomous machine (20) is allowed to move in the *determined* (203) direction.

5. The method according to any of claims 1-4, wherein *obtaining* (201) the identity of the autonomous machine (20) further comprises determining whether or not the identity of the autonomous machine (20) is unknown.

6. The method according to claim 5, wherein when the identity of the machine is unknown, the *obtained* (205) operational rule comprises stopping operations of the autonomous machine (20) and one or more objects (21) located in the first area (31) and/or the second area (32).

7. The method according to any of claims 1-6, wherein *determining* (204) whether the autonomous machine (20) is allowed to move in the *determined* (203) direction comprises determining whether the area where the autonomous machine (20) is located is the same as an area where the autonomous machine (20) is expected to be located.

8. The method according to any of claims 1-7, wherein when an area where the autonomous machine (20) is located differs from an area where the autonomous machine (20) is expected to be located, the autonomous machine (20) is not allowed to move in the *determined* (203) direction.

9. The method according to any of claims 1-7, wherein when an area where the autonomous machine (20) is located is the same as an area the autonomous machine (20) is expected to be located, determining (204) whether the autonomous machine (20) is allowed to move in the *determined* (203) direction comprises any one or more out of:
- evaluating one or more further criteria, or
- determining that the autonomous machine (20) is allowed to move in the *determined* (203) direction.

10. The method according to claim 9, wherein evaluating one or more further criteria comprises determining that the autonomous machine (20) is allowed to move in the *determined* (203) direction when any one or more out of:
- the number of objects (21) located in the second area (32) is less than the number of objects (21) allowed to be located in the second area (32),
- the status of the second area (32) is that autonomous operation is allowed, and
- the status of the second area (32) is that the autonomous machine (20) is allowed to operate in the second area (32).

11. The method according to claim 9, wherein evaluating one or more further criteria comprises determining that the autonomous machine (20) is not allowed to move in the *determined* (203) direction when any one or more out of:
- the number of objects (21) located in the second area (32) is equal to or exceeds the number of objects (21) allowed to be located in the second area (32),
- the status of the second area (32) is that autonomous operation is not allowed, and
- the status of the second area (32) is that the autonomous machine (20) is not allowed to operate in the second area (32).

12. A computer program (380) comprising instructions, which when executed by a processing circuitry (350), causes the processing circuitry (350) to perform actions according to any of the claims 1-11.

13. A central node (10) configured to handle operations in an underground environment (30), the underground environment (30) comprising at least a first area (31) and second area (32), wherein a first sensor (41) and a second sensor (42) are located at a border between the first area (31) and the second area (32), the first sensor (41) and the second sensor (42) being spaced apart by a distance such that the first sensor (41) is located closer to the first area (31) and the second sensor (42) is located closer to the second area (32), wherein an autonomous machine (20) is adapted to located in the first area (31) and one or more objects (21) is adapted to be located in the first area (31) and/or the second area (32), the central unit (10) arranged to comprise a memory (360) operable to store instructions and processing circuitry (350) operable to execute the instructions, such that the central node (10) is operable to:
when the autonomous machine (20) approaches the border between the first area (31) and the second area (32), *obtain* an identity of the autonomous machine (20) based on sensor data obtained from a third sensor (43),
*obtain* an indication from at least one of the first sensor (41) and the second sensor (42), the indication indicating that the autonomous machine (20) is about to breach the border,
*determine* that the autonomous machine (20) is moving in a direction from the first area (31) towards the second area (32) based on the indication,
*determine* whether the autonomous machine (20) is allowed to move in the *determined* direction based on the obtained identity and one or more criteria being fulfilled,
based on whether the autonomous machine (20) is allowed to move in the *determined* direction, *obtain* one or more operational rules,
*operate* the autonomous machine (20) and objects (21) located in the first area (31) and/or the second area (32) in accordance with the *obtained* one or more operational rules.

## Patentansprüche

1. Verfahren, durchgeführt von einem zentralen Knoten (10) zum Handhaben des Betriebs in einer unterirdischen Umgebung (30), wobei die unterirdische Umgebung (30) mindestens einen ersten Bereich (31) und einen zweiten Bereich (32) umfasst, wobei ein erster Sensor (41) und ein zweiter Sensor (42) an einer Grenze zwischen dem ersten Bereich (31) und dem zweiten Bereich (32) angeordnet sind, wobei der erste Sensor (41) und der zweite Sensor (42) durch einen Abstand beabstandet sind, so dass der erste Sensor (41) näher zu dem ersten Bereich (31) angeordnet ist und der zweite Sensor (42) näher zu dem zweiten Bereich (32) angeordnet ist, wobei eine autonome Maschine (20) in dem ersten Bereich (31) angeordnet ist und ein oder mehrere Objekte (21) in dem ersten Bereich (31) und/oder dem zweiten Bereich (32) angeordnet sind, wobei das Verfahren Folgendes umfasst:
wenn sich die autonome Maschine (20) der Grenze zwischen dem ersten Bereich (31) und dem zweiten Bereich (32) nähert, *Erhalten* (201) einer Identität der autonomen Maschine (20) auf der Grundlage von Sensordaten, die von einem dritten Sensor (43) erhalten werden,
*Erhalten* (202) einer Anzeige von mindestens einem von dem ersten Sensor (41) und dem zweiten Sensor (42), wobei die Anzeige anzeigt, dass die autonome Maschine (20) im Begriff ist, die Grenze zu überschreiten,
*Bestimmen* (203), auf der Grundlage der Anzeige, dass sich die autonome Maschine (20) in eine Richtung von dem ersten Bereich (31) zu dem zweiten Bereich (32) bewegt,
*Bestimmen* (204), ob die autonome Maschine (20) berechtigt ist, sich in der *bestimmten* (203) Richtung zu bewegen, auf der Grundlage der erhaltenen Identität und dessen, dass ein oder mehrere Kriterien erfüllt sind,
auf der Grundlage dessen, ob die autonome Maschine (20) berechtigt ist, sich in der *bestimmten* (203) Richtung zu bewegen, *Erhalten* (205) einer oder mehrerer Betriebsregeln,
*Betreiben* (206) der autonomen Maschine (20) und von Objekten (21), die in dem ersten Bereich (31) und/oder dem zweiten Bereich (32) angeordnet sind, in Übereinstimmung mit der oder den *erhaltenen* (205) Betriebsregeln.

2. Verfahren nach Anspruch 1, wobei eines aus Folgendem zutrifft:
*Bestimmen* (203) der Richtung, in die sich die autonome Maschine (20) bewegt, erfolgt auf der Grundlage dessen, welcher von dem ersten Sensor (41) und dem zweiten Sensor (42) die Anzeige bereitgestellt hat, oder
*Erhalten* (202) der Anzeige umfasst weiter das Erhalten einer ersten Anzeige von dem ersten Sensor (41) und einer zweiten Anzeige von dem zweiten Sensor (42), und wobei die Richtung, in die sich die autonome Maschine (1) bewegt, auf der Grundlage dessen *bestimmt* (203) wird, welche von der ersten Anzeige und der zweiten Anzeige mit der höchsten Signalstärke empfangen wird.

3. Verfahren nach einem der Ansprüche 1-2, wobei das eine oder die mehreren Kriterien eines oder mehrere aus Folgendem umfassen:
- einen Bereich der unterirdischen Umgebung (30), in dem die autonome Maschine (20) angeordnet ist, verglichen mit einem Bereich der unterirdischen Umgebung (30), in dem die autonome Maschine (20) erwartungsgemäß angeordnet sein soll,
- eine Richtung des Durchgangs zwischen dem ersten Bereich (31) und dem zweiten Bereich (32),
- ob die autonome Maschine (20) berechtigt ist, in dem ersten Bereich (31) und/oder dem zweiten Bereich (32) in Betrieb zu sein,
- eine Anzahl von Objekten (21), die in dem Bereich angeordnet sind, in den sich die autonome Maschine (20) bewegt,
- eine Anzahl von Objekten (21), die berechtigt sind, in dem Bereich angeordnet zu sein, in den sich die autonome Maschine (20) bewegt,
- einen Status des Bereichs, in den sich die autonome Maschine (20) bewegt, und
- einen Status der autonomen Maschine (20).

4. Verfahren nach einem der Ansprüche 1-3, wobei die eine oder die mehreren Betriebsregeln eines oder mehrere aus Folgendem umfassen:
- Stoppen des Betriebs der autonomen Maschine (20), wenn die autonome Maschine (20) nicht berechtigt ist, sich in der *bestimmten* (203) Richtung zu bewegen,
- Stoppen des Betriebs von mindestens einem des einen oder der mehreren Objekte (21), die in dem ersten Bereich (31) und/oder zweiten Bereich (32) angeordnet sind, wenn die autonome Maschine (20) nicht berechtigt ist, sich in der *bestimmten* (203) Richtung zu bewegen,
- Erlauben des fortgesetzten Betriebs der autonomen Maschine (20), wenn die autonome Maschine (20) berechtigt ist, sich in der *bestimmten* (203) Richtung zu bewegen, und
- Erlauben des fortgesetzten Betriebs von mindestens einem des einen oder der mehreren Objekte (21), die in dem ersten Bereich (31) und/oder zweiten Bereich (32) angeordnet sind, wenn die autonome Maschine (20) berechtigt ist, sich in der *bestimmten* (203) Richtung zu bewegen.

5. Verfahren nach einem der Ansprüche 1-4, wobei das *Erhalten* (201) der Identität der autonomen Maschine (20) weiter das Bestimmen umfasst, ob die Identität der autonomen Maschine (20) unbekannt ist oder nicht.

6. Verfahren nach Anspruch 5, wobei, wenn die Identität der Maschine unbekannt ist, die *erhaltene* (205) Betriebsregel das Stoppen des Betriebs der autonomen Maschine (20) und eines oder mehrerer Objekte (21), die in dem ersten Bereich (31) und/oder dem zweiten Bereich (32) angeordnet sind, umfasst.

7. Verfahren nach einem der Ansprüche 1-6, wobei das *Bestimmen* (204), ob die autonome Maschine (20) berechtigt ist, sich in der *bestimmten* (203) Richtung zu bewegen, das Bestimmen umfasst, ob der Bereich, in dem die autonome Maschine (20) angeordnet ist, derselbe ist wie ein Bereich, in dem die autonome Maschine (20) erwartungsgemäß angeordnet sein soll.

8. Verfahren nach einem der Ansprüche 1-7, wobei, wenn ein Bereich, in dem die autonome Maschine (20) angeordnet ist, sich von einem Bereich unterscheidet, in dem die autonome Maschine (20) erwartungsgemäß angeordnet sein soll, die autonome Maschine (20) nicht berechtigt ist, sich in der *bestimmten* (203) Richtung zu bewegen.

9. Verfahren nach einem der Ansprüche 1-7, wobei, wenn ein Bereich, in dem die autonome Maschine (20) angeordnet ist, derselbe ist wie ein Bereich, in dem die autonome Maschine (20) erwartungsgemäß angeordnet sein soll, das Bestimmen (204), ob die autonome Maschine (20) berechtigt ist, sich in der *bestimmten* (203) Richtung zu bewegen, eines oder mehrere aus Folgendem umfasst:
- Bewerten eines oder mehrerer weiterer Kriterien, oder
- Bestimmen, dass die autonome Maschine (20) berechtigt ist, sich in der *bestimmten* (203) Richtung zu bewegen.

10. Verfahren nach Anspruch 9, wobei das Bewerten eines oder mehrerer weiterer Kriterien das Bestimmen umfasst, dass die autonome Maschine (20) berechtigt ist, sich in der *bestimmten* (203) Richtung zu bewegen, wenn eines oder mehrere aus Folgendem zutrifft:
- die Anzahl von Objekten (21), die in dem zweiten Bereich (32) angeordnet sind, ist geringer als die Anzahl von Objekten (21), die berechtigt sind, in dem zweiten Bereich (32) angeordnet zu sein,
- der Status des zweiten Bereichs (32) ist, dass autonomer Betrieb erlaubt ist, und
- der Status des zweiten Bereichs (32) ist, dass die autonome Maschine (20) berechtigt ist, in dem zweiten Bereich (32) in Betrieb zu sein.

11. Verfahren nach Anspruch 9, wobei das Bewerten eines oder mehrerer weiterer Kriterien das Bestimmen umfasst, dass die autonome Maschine (20) nicht berechtigt ist, sich in der *bestimmten* (203) Richtung zu bewegen, wenn eines oder mehrere aus Folgendem zutrifft:
- die Anzahl von Objekten (21), die in dem zweiten Bereich (32) angeordnet sind, ist gleich der Anzahl von Objekten (21), die berechtigt sind, in dem zweiten Bereich (32) angeordnet zu sein, oder übersteigt diese,
- der Status des zweiten Bereichs (32) ist, dass autonomer Betrieb nicht erlaubt ist, und
- der Status des zweiten Bereichs (32) ist, dass die autonome Maschine (20) nicht berechtigt ist, in dem zweiten Bereich (32) in Betrieb zu sein.

12. Computerprogramm (380), das Anweisungen umfasst, die, wenn sie von einer Verarbeitungsschaltung (350) ausgeführt werden, bewirken, dass die Verarbeitungsschaltung (350) Maßnahmen nach einem der Ansprüche 1-11 ausführt.

13. Zentraler Knoten (10), konfiguriert zum Handhaben des Betriebs in einer unterirdischen Umgebung (30), wobei die unterirdische Umgebung (30) mindestens einen ersten Bereich (31) und einen zweiten Bereich (32) umfasst, wobei ein erster Sensor (41) und ein zweiter Sensor (42) an einer Grenze zwischen dem ersten Bereich (31) und dem zweiten Bereich (32) angeordnet sind, wobei der erste Sensor (41) und der zweite Sensor (42) um einen Abstand beabstandet sind, sodass der erste Sensor (41) näher an dem ersten Bereich (31) angeordnet ist und der zweite Sensor (42) näher an dem zweiten Bereich (32) angeordnet ist, wobei eine autonome Maschine (20) angepasst ist, in dem ersten Bereich (31) angeordnet zu sein, und ein oder mehrere Objekte (21) angepasst sind, in dem ersten Bereich (31) und/oder dem zweiten Bereich (32) angeordnet zu sein, wobei die Zentraleinheit (10) eingerichtet ist, einen Speicher (360), der eingerichtet ist, Anweisungen zu speichern, und eine Verarbeitungsschaltung (350) zu umfassen, die eingerichtet ist, die Anweisungen auszuführen, sodass der zentrale Knoten (10) für Folgendes eingerichtet ist:
wenn sich die autonome Maschine (20) der Grenze zwischen dem ersten Bereich (31) und dem zweiten Bereich (32) nähert, eine Identität der autonomen Maschine (20) auf der Grundlage von Sensordaten *zu erhalten,* die von einem dritten Sensor (43) erhalten werden,
eine Anzeige von mindestens einem von dem ersten Sensor (41) und dem zweiten Sensor (42) *zu erhalten,* wobei die Anzeige anzeigt, dass die autonome Maschine (20) im Begriff ist, die Grenze zu überschreiten,
*zu bestimmen,* auf der Grundlage der Anzeige, dass sich die autonome Maschine (20) in eine Richtung von dem ersten Bereich (31) zu dem zweiten Bereich (32) bewegt,
*zu bestimmen,* ob die autonome Maschine (20) berechtigt ist, sich in der *bestimmten* Richtung zu bewegen, auf der Grundlage der erhaltenen Identität und dessen, dass ein oder mehrere Kriterien erfüllt sind,
auf der Grundlage dessen, ob die autonome Maschine (20) berechtigt ist, sich in der *bestimmten* Richtung zu bewegen, eine oder mehrere Betriebsregeln *zu erhalten,*
die autonome Maschine (20) und Objekte (21), die in dem ersten Bereich (31) und/oder dem zweiten Bereich (32) angeordnet sind, in Übereinstimmung mit der oder den erhaltenen Betriebsregeln *zu betreiben.*

## Revendications

1. Procédé mis en œuvre par un nœud central (10) pour gérer des opérations dans un environnement souterrain (30), l'environnement souterrain (30) comprenant au moins une première zone (31) et une deuxième zone (32), dans lequel un premier capteur (41) et un deuxième capteur (42) sont situés au niveau d'une limite entre la première zone (31) et la deuxième zone (32), le premier capteur (41) et le deuxième capteur (42) étant espacés d'une distance telle que le premier capteur (41) est situé plus près de la première zone (31) et le deuxième capteur (42) est situé plus près de la deuxième zone (32), dans lequel une machine autonome (20) est située dans la première zone (31) et un ou plusieurs objets (21) sont situés dans la première zone (31) et/ou la deuxième zone (32), le procédé comprenant :
lorsque la machine autonome (20) s'approche de la limite entre la première zone (31) et la deuxième zone (32), *l'obtention* (201) d'une identité de la machine autonome (20) sur la base de données de capteur obtenues à partir d'un troisième capteur (43),
*l'obtention* (202) d'une indication provenant d'au moins l'un du premier capteur (41) et du deuxième capteur (42), l'indication indiquant que la machine autonome (20) est sur le point de franchir la limite,
*la détermination* (203) du fait que la machine autonome (20) est en déplacement dans une direction depuis la première zone (31) vers la deuxième zone (32) sur la base de l'indication,
*la détermination* (204) de savoir si la machine autonome (20) est autorisée à se déplacer dans la direction *déterminée* (203) sur la base de l'identité obtenue et du fait qu'un ou plusieurs critères sont remplis,
sur la base que la machine autonome (20) est autorisée ou non à se déplacer dans la direction *déterminée* (203), l'*obtention* (205) d'une ou de plusieurs règles opérationnelles,
*l'utilisation* (206) de la machine autonome (20) et d'objets (21) situés dans la première zone (31) et/ou la deuxième zone (32) conformément à la une ou aux plusieurs règles opérationnelles *obtenues (205).*

2. Procédé selon la revendication 1, comprenant un élément quelconque parmi :
*la détermination* (203) de la direction dans laquelle la machine autonome (20) est en déplacement est basée sur celui du premier capteur (41) et du deuxième capteur (42) qui a fourni l'indication, ou
*l'obtention* (202) de l'indication comprend en outre l'obtention d'une première indication à partir du premier capteur (41) et d'une deuxième indication à partir du deuxième capteur (42), et dans lequel la direction dans laquelle la machine autonome (1) est en déplacement est *déterminée* (203) sur la base de celle de la première indication et de la deuxième indication qui est reçue avec la force de signal la plus élevée.

3. Procédé selon l'une quelconque des revendications 1 à 2, dans lequel le un ou les plusieurs critères comprennent l'un ou plusieurs quelconques parmi :
- une zone de l'environnement souterrain (30) où la machine autonome (20) est située comparée à une zone de l'environnement souterrain (30) où la machine autonome (20) est censée être située,
- une direction de passage entre la première zone (31) et la deuxième zone (32),
- si la machine autonome (20) est autorisée ou non à fonctionner dans la première zone (31) et/ou la deuxième zone (32),
- un nombre d'objets (21) situés dans la zone vers laquelle la machine autonome (20) est en déplacement,
- un nombre d'objets (21) autorisés à être situés dans la zone vers laquelle la machine autonome (20) est en déplacement,
- un statut de la zone vers laquelle la machine autonome (20) est en déplacement, et
- un statut de la machine autonome (20).

4. Procédé selon l'une quelconque des revendications 1 à 3, dans lequel la une ou les plusieurs règles opérationnelles comprennent l'un ou plusieurs quelconques parmi :
- l'arrêt des opérations de la machine autonome (20) lorsque la machine autonome (20) n'est pas autorisée à se déplacer dans la direction *déterminée (203),*
- l'arrêt des opérations d'au moins l'un du un ou des plusieurs objets (21) situés dans la première zone (31) et/ou la deuxième zone (32) lorsque la machine autonome (20) n'est pas autorisée à se déplacer dans la direction *déterminée (203),*
- l'autorisation d'une poursuite des opérations de la machine autonome (20) lorsque la machine autonome (20) est autorisée à se déplacer dans la direction *déterminée (203),* et
- l'autorisation d'une poursuite des opérations d'au moins l'un du un ou des plusieurs objets (21) situés dans la première zone (31) et/ou la deuxième zone (32) lorsque la machine autonome (20) est autorisée à se déplacer dans la direction *déterminée (203).*

5. Procédé selon l'une quelconque des revendications 1 à 4, dans lequel *l'obtention* (201) de l'identité de la machine autonome (20) comprend en outre la détermination de savoir si l'identité de la machine autonome (20) est ou non inconnue.

6. Procédé selon la revendication 5, dans lequel, lorsque l'identité de la machine est inconnue, la règle opérationnelle *obtenue* (205) comprend l'arrêt des opérations de la machine autonome (20) et d'un ou de plusieurs objets (21) situés dans la première zone (31) et/ou la deuxième zone (32).

7. Procédé selon l'une quelconque des revendications 1 à 6, dans lequel la *détermination* (204) de savoir si la machine autonome (20) est autorisée à se déplacer dans la direction *déterminée* (203) comprend la détermination de savoir si la zone où la machine autonome (20) est située est la même qu'une zone où la machine autonome (20) est censée être située.

8. Procédé selon l'une quelconque des revendications 1 à 7, dans lequel, lorsqu'une zone où la machine autonome (20) est située diffère d'une zone où la machine autonome (20) est censée être située, la machine autonome (20) n'est pas autorisée à se déplacer dans la direction *déterminée* (203)*.*

9. Procédé selon l'une quelconque des revendications 1 à 7, dans lequel, lorsqu'une zone où la machine autonome (20) est située est la même qu'une zone dans laquelle la machine autonome (20) est censée être située, la détermination (204) de savoir si la machine autonome (20) est autorisée à se déplacer dans la direction *déterminée* (203) comprend l'une ou plusieurs quelconques parmi :
- l'évaluation d'un ou de plusieurs autres critères, ou
- la détermination du fait que la machine autonome (20) est autorisée à se déplacer dans la direction *déterminée* (203).

10. Procédé selon la revendication 9, dans lequel l'évaluation d'un ou de plusieurs autres critères comprend la détermination du fait que la machine autonome (20) est autorisée à se déplacer dans la direction *déterminée* (203) en présence d'un ou de plusieurs quelconques parmi :
- le nombre d'objets (21) situés dans la deuxième zone (32) est inférieur au nombre d'objets (21) autorisés à être situés dans la deuxième zone (32),
- le statut de la deuxième zone (32) est qu'un fonctionnement autonome est autorisé, et
- le statut de la deuxième zone (32) est que la machine autonome (20) est autorisée à fonctionner dans la deuxième zone (32).

11. Procédé selon la revendication 9, dans lequel l'évaluation d'un ou de plusieurs autres critères comprend la détermination du fait que la machine autonome (20) n'est pas autorisée à se déplacer dans la direction *déterminée* (203) en présence d'un ou de plusieurs quelconques parmi :
- le nombre d'objets (21) situés dans la deuxième zone (32) est égal à ou dépasse le nombre d'objets (21) autorisés à être situés dans la deuxième zone (32),
- le statut de la deuxième zone (32) est qu'un fonctionnement autonome n'est pas autorisé, et
- le statut de la deuxième zone (32) est que la machine autonome (20) n'est pas autorisée à fonctionner dans la deuxième zone (32).

12. Programme (380) d'ordinateur comprenant des instructions, qui lorsqu'exécutées par une circuiterie (350) de traitement, amènent la circuiterie (350) de traitement à réaliser des actions selon l'une quelconque des revendications 1 à 11.

13. Nœud central (10) configuré pour gérer des opérations dans un environnement souterrain (30), l'environnement souterrain (30) comprenant au moins une première zone (31) et une deuxième zone (32), dans lequel un premier capteur (41) et un deuxième capteur (42) sont situés au niveau d'une limite entre la première zone (31) et la deuxième zone (32), le premier capteur (41) et le deuxième capteur (42) étant espacés d'une distance telle que le premier capteur (41) est situé plus près de la première zone (31) et le deuxième capteur (42) est situé plus près de la deuxième zone (32), dans lequel une machine autonome (20) est adaptée pour être située dans la première zone (31) et un ou plusieurs objets (21) sont adaptés pour être situés dans la première zone (31) et/ou la deuxième zone (32), le nœud central (10) étant agencé pour comprendre une mémoire (360) fonctionnelle pour stocker des instructions et une circuiterie (350) de traitement fonctionnelle pour exécuter les instructions, de sorte que le nœud central (10) est fonctionnel pour :
lorsque la machine autonome (20) s'approche de la limite entre la première zone (31) et la deuxième zone (32), *obtenir* une identité de la machine autonome (20) sur la base de données de capteur obtenues à partir d'un troisième capteur (43),
*obtenir* une indication provenant d'au moins l'un du premier capteur (41) et du deuxième capteur (42), l'indication indiquant que la machine autonome (20) est sur le point de franchir la limite,
*déterminer* le fait que la machine autonome (20) est en déplacement dans une direction depuis la première zone (31) vers la deuxième zone (32) sur la base de l'indication,
*déterminer si* la machine autonome (20) est autorisée à se déplacer dans la direction *déterminée* sur la base de l'identité obtenue et du fait qu'un ou plusieurs critères sont remplis,
sur la base que la machine autonome (20) est autorisée ou non à se déplacer dans la direction *déterminée, obtenir* une ou plusieurs règles opérationnelles,
*utiliser* la machine autonome (20) et des objets (21) situés dans la première zone (31) et/ou la deuxième zone (32) conformément à la une ou aux plusieurs règles opérationnelles *obtenues.*
